# EUROPEAN PATENT SPECIFICATION

(11) **EP 3 096 263 B1**
(45) Date of publication and mention of the grant of the patent: **15.11.2017**
(21) Application number: 16168810.6
(22) Date of filing: 09.05.2016
(51) Int. Cl.: G06T 7/70, G06T 7/285, G06T 7/194, G06T 7/20, G06K 9/00

(54) **HUMAN BODY ORIENTATION RECOGNITION METHOD AND SYSTEM BASED ON TWO-LENS CAMERA**
VERFAHREN UND SYSTEM ZUR ERKENNUNG DER AUSRICHTUNG EINES MENSCHLICHEN KÖRPERS BASIEREND AUF EINER KAMERA MIT ZWEI LINSEN
PROCÉDÉ DE RECONNAISSANCE D'ORIENTATION DU CORPS HUMAIN ET SYSTÈME BASÉ SUR UNE CAMÉRA À DEUX LENTILLES

(30) Priority: 12.05.2015 CN 201510237881
(43) Date of publication of application: 23.11.2016
(73) Proprietor: Ricoh Company, Ltd., Tokyo 143-8555 (JP)
(72) Inventor: QIAO, Gang, Haidian District Beijing 100044 (CN); WANG, Qian, Haidian District Beijing 100044 (CN); WANG, XIN, Haidian District Beijing 100044 (CN); FAN, Shengyin, Haidian District Beijing 100044 (CN); ZHU, Jiadan, Haidian District Beijing 100044 (CN)
(74) Representative: Watkin, Timothy Lawrence Harvey

(56) References cited:
- US-A1- 2010 111 374
- US-A1- 2014 300 746
- US-B1- 7 003 136
- OVGU OZTURK ET AL: "Tracking of humans and estimation of body/head orientation from top-view single camera for visual focus of attention analysis", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 September 2009 (2009-09-27), pages 1020-1027, XP031664603, ISBN: 978-1-4244-4442-7
- HARVILLE M ET AL: "Fast, integrated person tracking and activity recognition with plan-view templates from a single stereo camera", PROCEEDINGS OF THE 2004 IEEE COMPUTER SOCIETY CONFERENCE ON COMPUTER VISION AND PATTERN RECOGNITION 27 JUNE-2 JULY 2004 WASHINGTON, DC, USA, IEEE, PROCEEDINGS OF THE 2004 IEEE COMPUTER SOCIETY CONFERENCE ON COMPUTER VISION AND PATTERN RECOGNITION IEE, vol. 2, 27 June 2004 (2004-06-27), pages 398-405, XP010708670, DOI: 10.1109/CVPR.2004.1315191 ISBN: 978-0-7695-2158-9
- LIU JUN ET AL: "Detecting and tracking people in real time with RGB-D camera", PATTERN RECOGNITION LETTERS, vol. 53, 6 November 2014 (2014-11-06), pages 16-23, XP029220881, ISSN: 0167-8655, DOI: 10.1016/J.PATREC.2014.09.013

## Description

### BACKGROUND OF THE INVENTION

### 1. Field of the Invention

The present invention relates to the field of machine learning and recognition on the grounds of stereo vision, more particularly relates to a human body orientation recognition method and system based on a two-lens camera.

### 2. Description of the Related Art

Human body orientation recognition is one of the key topics in the field of computer vision. The reasons are as follows: (1) The human body orientation recognition may support some computer vision applications and high-level computer vision tasks. For example, a human body orientation is the basis of human interaction and indication of an orientation of concern. Also, for example, in an exhibition hall, the attraction degree of a product may be expressed by the attention of human beings. (2) The research in the conventional techniques is mainly concentrated on extracting the features related to the robustness of affine transformation. However, some approaches such as SIFT (Scale Invariant Feature Transformation) based one and SURF (Speeded Up Robust Features) based one change robustness only with respect to limited angles. That is, there is still a noticeable difference between the features extracted from those images based on large view angles. (3) In some conventional algorithms such as Hidden Markov Models and Bayesian Networks related to computer vision tasks (e.g., human behavior recognition), only feature expressions serve as abstract observation models, and their specific achievements are ignored. Hence these kinds of conventional algorithms are inherently sensitive to the feature differences due to the changes of view angles of human beings or other objects.

As a result, if the low-level information related to view angles may be calculated, then this kind of information may support the relevant high-level algorithms so as to solve the problems caused by the changes of view angles, and may support various applications of computer vision.

In order to calculate the human body orientation, the conventional techniques of detecting and tracking the movement of a human body in the world coordinate system are usually utilized because the movement trajectory of the human body is a kind of natural expression of the human body orientation. In a case where a human body moves at a certain speed, a simple PCA (Principal Component Analysis) approach may efficiently calculate the principal direction of the human body located at the three-dimensional position obtained at the adjacent time point so as to serve as a reasonable estimate of the human body orientation. However, if the human body moves very slowly or holds still, then this kind of approach is invalid because in this case, the three-dimensional positions of the human body are just like random steps.

As a result, it may be said that a problem needing to be solved in the conventional techniques is how to conduct human body orientation recognition without the movement trajectory of the human being.

Currently there are a few conventional techniques aiming to solve this kind of problem, for example, International Patent Application Publication No. WO 2004/111867 A2 and U.S. Patent No. 8,687,880 B2. However, these kinds of techniques are mainly focused on estimating the three-dimensional structure of an object (e.g., a human body) on the basis of its incomplete two-dimensional image by utilizing a classifier which over-depends on the two-dimensional appearance of the object. That is, by utilizing these kinds of techniques, it is impossible to really solve the above-described problem. "Tracking of humans and estimation of body/head orientation from top-view single camera for visual focus of attention analysis" by Ovgu Ozturk et al addresses the problem of determining a person's body and head orientations while tracking the person in an indoor environment monitored by a single top-view camera. US2014/300746 describes an image analysis method.

Therefore, it is necessary to provide a more accurate human body orientation recognition technique.

### SUMMARY OF THE INVENTION

According to a first aspect of the present invention, a method of recognizing a human body orientation based on a two-lens camera is provided which includes:
a receipt step of receiving a grayscale or color image and a corresponding depth map including the human body, obtained by the two-lens camera;
an obtainment step of conducting foreground recognition to get foreground pixels so as to carry out XYZ-dimensional reconstruction with respect to a depth map of the foreground pixels in a world coordinate system to acquire a three-dimensional image, and then, projecting the three-dimensional image onto the XZ plane in the world coordinate system so as to obtain a top view, wherein, X represents width, Y denotes height, and Z refers to depth;
a tracking step of tracking a movement trajectory of the human body based on the top view;
a determination step of determining whether a moving velocity of the human body acquired according to the movement trajectory of the human body is greater than a predetermined threshold;
a first recognition step of recognizing, if the moving velocity of the human body is greater than the predetermined threshold, a direction of the movement trajectory of the human body as the human body orientation;
a first acquirement step of conducting, if the moving velocity of the human body is less than or equal to the predetermined threshold, classification with respect to the top view by using a perpendicular-to-shoulder direction classifier so as to acquire an initial pair of relative directions from plural predetermined pairs of relative directions;
a second acquirement step of conducting back projection onto the plane XY with respect to the three-dimensional image so as to acquire two-dimensional information of a head region; and
a second recognition step of conducting classification with respect to the two-dimensional information of the head region by utilizing a face binary classifier so as to select one direction from the initial pair of relative directions which corresponds to an orientation of a facial portion in the head region to serve as the human body orientation.

According to a second aspect of the present invention, a system for recognizing a human body orientation based on a two-lens camera is provided which includes:
a receipt part configured to receive a grayscale or color image and a corresponding depth map including the human body, obtained by the two-lens camera;
an obtainment part configured to conduct foreground recognition to get foreground pixels so as to carry out XYZ-dimensional reconstruction with respect to a depth map of the foreground pixels in a world coordinate system to acquire a three-dimensional image, and then, to project the three-dimensional image onto the XZ plane in the world coordinate system so as to obtain a top view, wherein, X represents width, Y denotes height, and Z refers to depth;
a tracking part configured to track a movement trajectory of the human body based on the top view;
a determination part configured to determine whether a moving velocity of the human body acquired according to the movement trajectory of the human body is greater than a predetermined threshold; and
a recognition part configured to
   if the moving velocity of the human body is greater than the predetermined threshold, then recognize a direction of the movement trajectory of the human body as the human body orientation, and
   if the moving velocity of the human body is less than or equal to the predetermined threshold, then
      conduct classification with respect to the top view by using a perpendicular-to-shoulder direction classifier so as to acquire an initial pair of relative directions from plural predetermined pairs of relative directions,
      conduct back projection onto the plane XY with respect to the three-dimensional image so as to acquire two-dimensional information of a head region; and
      conduct classification with respect to the two-dimensional information of the head region by utilizing a face binary classifier so as to select one direction from the initial pair of relative directions which corresponds to an orientation of a facial portion in the head region to serve as the human being orientation.

As a result, by utilizing the human body orientation recognition method and system, it is possible to use a two-lens camera to carry out three-dimensional reconstruction so as to break the constraint of the two-dimensional appearance of an object (e.g., a human body) on the relevant classifier. On the other hand, the two-dimensional appearance of the human body is still used to obtain the detailed clues related to the human body orientation. On the basis of this, the process of the human body orientation recognition method and system is divided into two stages, i.e., first and second stages. In the first stage, a projection process is conducted with respect to a three-dimensional point cloud so as to generate a height template based feature(s) which retains the spatial property and is applied to N-direction classification. According to the output result of the first stage, in the second stage, a head region of the human body is determined in a two-dimensional grayscale or color image obtained by carrying out back projection, and a normalized feature(s), which also keeps the spatial property, is further extracted for binary classification.

### BRIEF DESCRIPTION OF THE DRAWINGS

FIG. 1 is a block diagram of a hardware structure which may be applied to the respective embodiments of the present invention;
FIG. 2 is a flowchart of a human body orientation recognition method based on a two-lens camera, according to an embodiment of the present invention;
FIG. 3 illustrates an example of the process of STEPS S206 to S208 in FIG. 2;
FIG. 4 illustrates the principles of top view generation as well as human body detection and tracking;
FIG. 5 illustrates an example of direction estimation based on a movement trajectory or orientations;
FIG. 6 illustrates an example of perpendicular-to-shoulder direction classification conducted with respect to a detection region of a top view;
FIG. 7 illustrates an example of how to obtain a human body bounding box in a two-dimensional image obtained by utilizing the principle of back projection;
FIG. 8 illustrates an example of face binary classification conducted with respect to a human body bounding box; and
FIG. 9 illustrates a block diagram of a human body recognition system according to an embodiment of the present invention.

### DETAINED DESCRIPTION OF THE PREFERRED EMBODIMENTS

In order to let those people skilled in the art better understand the present invention, hereinafter, the embodiments of the present invention will be concretely described with reference to the drawings. However, it should be noted that the same symbols, which are in the specification and the drawings, stand for constructional elements having basically the same function and structure, and the repeated explanations for the constructional elements are omitted.

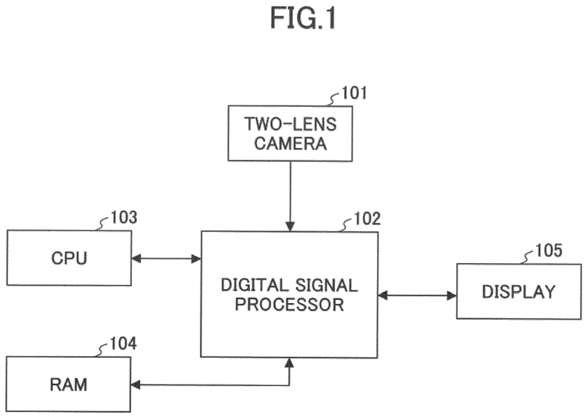

FIG. 1 is a block diagram of a hardware structure which may be applied to the respective embodiments of the present invention.

As shown in FIG. 1, the hardware structure may include a two-lens camera 101, a digital signal processor 102, a central processing unit (CPU) 103, a storage (e.g., a random access memory (RAM)) 104, and a display 105.

The two-lens camera 101 is configured to photograph an object such as a human body so as to obtain an image pair sequence consisting of pairs of grayscale (or color) images and their corresponding depth (or disparity) maps. The digital signal processor 102 is configured to receive and process the image pair sequence so as to output a direction calculation or orientation recognition result. The CPU 103 is configured to handle the data which is input/output into/from the digital signal processor 102. The storage 104 is configured to temporarily or permanently store the data that the digital signal processor 102 needs. The display 105 is configured to display the direction calculation or orientation recognition result.

Here it should be noted that the respective embodiments of the present invention may be implemented by using the digital signal processor 102. However, the hardware structure shown in FIG. 1 is just an example. Actually it may also include a touch panel for inputting operation instructions, a speaker for outputting the direction calculation or orientation recognition result in an audio manner, etc.

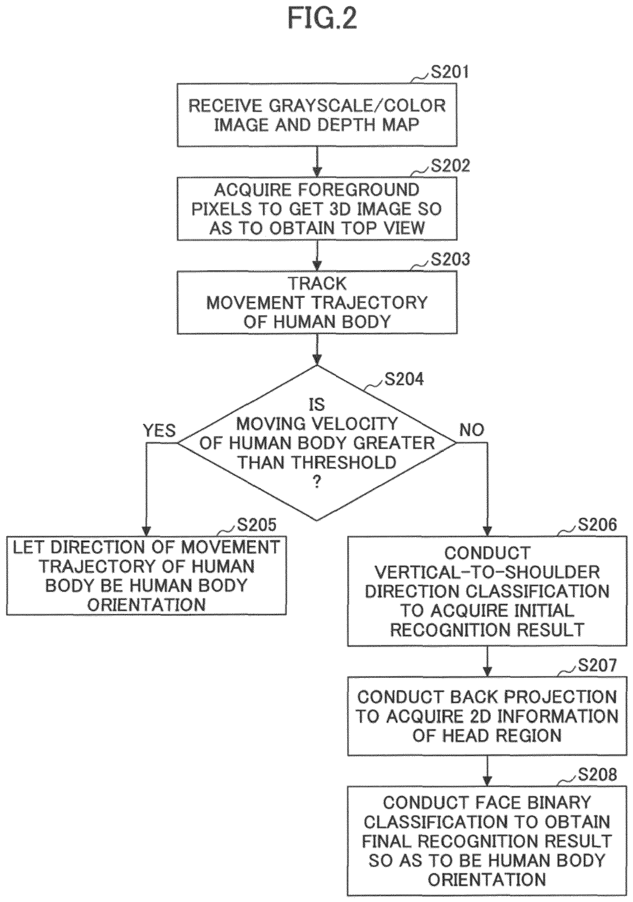

FIG. 2 is a flowchart of a human body orientation recognition method based on a two-lens camera, according to an embodiment of the present invention.

As shown in FIG. 2, the human body orientation recognition method may include STEPS S201 to S208.

In STEP S201, a two-dimensional grayscale or color image and its corresponding depth map including a human body are input. In STEP S202, a foreground recognition process is conducted so as to acquire foreground pixels, so that a three-dimensional reconstruction process is performed on a depth map of the foreground pixels in the world coordinate system so as to get a three-dimensional image. Here the three dimensions are X, Y, and Z dimensions which refer to width, height, and depth, respectively. Furthermore, the three-dimensional image in the world coordinate system is projected onto the XZ plane so as to generate a top view. In STEP S203, the movement trajectory of the human body is tracked on the basis of the top view. In STEP S204, it is determined whether the moving velocity of the human body obtained from the result of tracking the movement trajectory of the human body is greater than a predetermined threshold.

Next, in STEP S205, if the moving velocity of the human body is greater than the predetermined threshold, then the direction of the movement trajectory of the human body serves as the human body orientation. In STEP S206, if the moving velocity of the human body is less than or equal to the predetermined threshold, then a classification process is conducted with respect to the top view by using a perpendicular-to-shoulder direction classifier so as to obtain an initial pair of
relative directions from plural predetermined pairs of relative directions to serve as a perpendicular-to-shoulder direction recognition result.

After that, in STEP S207, a back projection process is performed on the three dimensional image so as to acquire two-dimensional information of a head region of the human body. In STEP S208, a classification process is conducted with respect to the two dimensional information of the head region by utilizing a face binary classifier, so as to select, from the initial pair of relative directions, one direction, which corresponds to the orientation of the facial portion in the head region, to serve as the human body orientation.

In this way, by utilizing the top view based on the foreground pixels, it is possible to track the movement trajectory of the foreground object (i.e., the human body), and when the moving velocity of the human body is relative large, to adopt the direction of the movement trajectory of the human body to serve as the human body orientation, so that it is possible to reduce the amount of calculation and to improve the efficiency of the human body orientation recognition process. On the other hand, when the moving velocity of the human body is relatively small, by respectively adopting two classifiers (i.e., the perpendicular-to-shoulder direction classifier and the face binary
classifier) in two stages (i.e., first and second stages), in the first stage, it is possible to obtain the initial pair of directions vertical to the shoulder direction of the human body, and then, to obtain the head region by conducting back projection; and in the second stage, it is possible to select, from the initial pair of directions, one direction approaching the orientation of the facial portion in the head region to serve as the final orientation of the human body. As a result, even in a case where the moving velocity of the human body is relatively small, it is also possible to accurately estimate the orientation of the human body so as to have a better human body orientation recognition effect. That is, the problem in the conventional techniques, that it is difficult to acquire an accurate human body orientation recognition result when the moving velocity of a human body is relatively small, may be solved.

Moreover, since the initial pair of directions is obtained in the first stage by utilizing the perpendicular-to-shoulder direction classifier, it is possible to first narrow the selection range of the human body orientation to the initial pair of directions. And then, by utilizing the face binary classifier to find the facial portion in the head region, it is possible to further accurately determine one direction of the initial pair of directions as the orientation of the human body. In this way, it is possible to gradually narrow the selection range of the human body orientation so as to eventually acquire a more accurate orientation recognition result, and in the meantime, the amount of calculation may not be too large.

In what follows, the human body orientation recognition method shown in FIG. 2 will be depicted in detail.

In an example, the perpendicular-to-shoulder direction classifier may include one obtained by carrying out a training process on the grounds of plural training samples whose relevant directions are known to be vertical to the shoulder direction of the human body, the plural training samples being collected based on a feature retaining spatial information, which is obtained by letting each of discrete rectangles of each top view on the XZ plane be a height template, and then, conducting extraction with respect to the highest Y component of each point in each height template.

Here, by utilizing the highest Y component of each point in each height template, it is possible to acquire, for example, a spatial outline of the portion above the shoulder of the human body for the follow-on perpendicular-to-shoulder direction classification process.

In particular, first N pairs of relative directions are predetermined. For example, if N is equal to four, then four pairs of relative directions may be obtained which are related to 0, 45, 90, and 135 degrees, respectively. And then, plural training samples, whose relevant directions are known to be vertical to the shoulder direction of the human body and are among the predetermined N pairs of relative directions, are collected. After that, by utilizing the above-described feature of the plural training samples and those known perpendicular-to-shoulder direction tags, it is possible to acquire the perpendicular-to-shoulder classifier.

Here the vertical-shoulder direction classification approach may include an unsupervised learning based one, a supervised learning (e.g., RF (Random Forest), SVM (Support Vector Machine), AdaBoost, etc.) based one, a semi-supervised learning (e.g., Generative Model, Low-density Separation, Graph-based Method, Heuristic Approach) based one, etc. Preferably, it is possible to use a RF based classifier to serve as the perpendicular-to-shoulder direction classifier.

Of course, the above-described feature retaining spatial information for collecting the plural training samples in this example is just an instance. The present invention is not limited to this. That is, it is also possible to use any other proper feature such as the spatial distribution of the numbers of the respective points in each height template, the spatial distribution of the average heights of the respective points in each height template, etc.

In an example, the face binary classifier may include one obtained by conducting a training process on the basis of plural training samples whose facial positions are known, the plural training samples being collected based on a feature retaining spatial information, which is extracted in the head region of the human body in the two-dimensional grayscale or color image.

In this way, by utilizing the spatial distribution of color information of the head region, it is possible to collect the plural training samples whose facial positions are known so as to obtain the face binary classifier by conducting training. This kind of feature may be, for example, a raw feature, a Haar-like feature, etc. Of course, this kind of feature is just an instance. The present invention is not limited to this. That is, it is also possible to use any other proper feature retaining the spatial information.

Here the face binary classification approach may include a KNN (K-Nearest Neighbor) based one, a Hausdorff distance based one, etc. The Hausdorff distance based approach is calculating the distance between two sets of points. Regarding sets of samples belonging to a same class, the samples are similar to each other. As such, the distance between two sets of samples belonging to the same class is usually less that that between two sets of samples belonging to different classes. Preferably, it is possible to use a KNN based classifier to serve as the face binary classifier. The output of the face binary classifier may be one direction of the initial pair of directions obtained in the first stage, which is closer to the face related feature (e.g., the orientation of the facial portion) extracted.

In an example, STEP S202 in FIG. 2 may include converting the depth map into a camera coordinate system, and then, into a local world coordinate system relative to the two-lens camera so as to get the top view.

In an example, STEP S203 in FIG. 2 may include obtaining a sequence of height images after noise filtering from a sequence of depth maps continuously obtained by the two-lens camera in a manner of (1) letting each of discrete rectangles of each top view on the XZ plane serve as a height template, and then, retaining the highest Y component of each point in each height template so as to obtain a height image; (2) regarding each height template, counting the number of points in its each 3D grid (also called a "bin" which will be depicted below) so as to acquire a mask image; and (3) conducting noise filtering with respect to the height images by using the mask images, respectively. After that, by detecting and tracking the height templates in the sequence of the height images after noise filtering, it is possible to acquire the movement trajectory related to the height templates.

In this way, it is possible to get the height images having little noise, so that by utilizing these kinds of height images, it is possible to acquire a more accurate human body orientation recognition result.

Of course, it should be noted that obtaining the mask images and conducting noise filtering by using the mask images is just an instance. That is, the present invention is not limited to this.

In the light of the above, the human body orientation recognition method shown in FIG. 2 may further including a step of calculating, by obtaining the Euclidean distances between the height templates in the sequence of height images after noise filtering, the moving velocity of the human body on the basis of the frame rate of the two-lens camera when it continuously photographs. Consequently, STEP S205 in FIG. 2 may include obtaining the principal direction of the human body moving in the space by utilizing the PCA (Principal Component Analysis) approach on the basis of the movement trajectory related to the height templates to serve as the human body orientation if the calculated moving velocity of the human body is greater than the predetermined threshold.

Here, if the two-lens camera continuously captures a sequence of grayscale or color images and their corresponding depth maps, then it is possible to obtain a sequence of height images according to the above-described process. In this way, it is possible to estimate the movement trajectory of the human body on the basis of the movement trajectory related to the highest points (e.g., the top of the human body's head) in the world coordinate system. After that, on the grounds of the frame rate of the two-lens camera, it is possible to know the time duration of the movement trajectory the human body, so as to estimate the moving velocity of the human body. Accordingly, on the basis of the moving velocity of the human body, it is possible to decide to acquire the principal direction of the human body moving the space by utilizing the PCA approach to serve as the human body orientation (that is, in a case where the moving velocity of the human body is relatively large) or to estimate the orientation of the facial portion vertical to the shoulder direction of the human body by utilizing the perpendicular-to-shoulder direction classifier and the face binary classifier to serve as the human body orientation (that is, in a case where the moving velocity of the human body is relatively small).

In an example, STEP S207 in FIG. 2 may include conducting back projection with respect to the three-dimensional image so as to acquire a two-dimensional human body rectangle (also called a "bounding box"); and on the grounds of the ratio of the head length to the body length, the height of the highest point in the three-dimensional image, the ratio of the head width to the shoulder width, and the height of the highest point in the top view, extracting the head region from the two-dimensional human body bounding box so as to obtain the two-dimensional information of the head region.

Here it should be noted that the ratio of the head length to the body length, the ratio of the head width to the shoulder width, etc., may be predetermined based on empirical values or by conducting normalization based on a lot of samples.

Of course, it is also possible to extract the head region from the two-dimensional human body bounding box by utilizing any other proper approach. For example, it is also possible to estimate the head region based on only the ratio of the head length to the body length and the height of the highest point in the three-dimensional image according to a prior knowledge that the head portion is usually below the highest point (i.e., the top of the head). That is, in this case, it is not necessary to consider the head width.

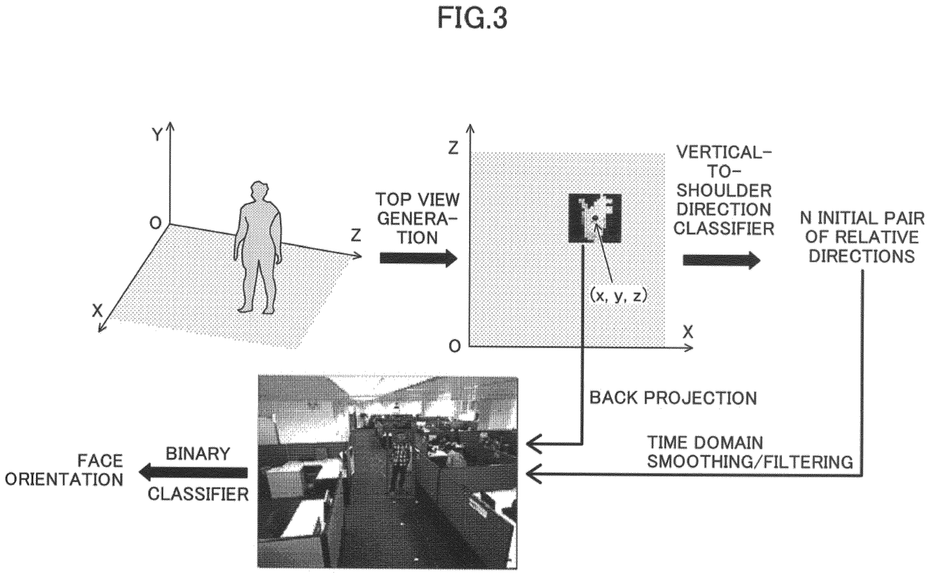

FIG. 3 illustrates an example of the process of STEPS S206 to S208 of the human body orientation recognition method shown in FIG. 2.

As shown in FIG. 3, after generating the top view in the upper right corner from the foreground pixels in the upper left corner, in STEP S206, if the human body moving velocity obtained is less than or equal to the predetermined threshold, then the perpendicular-to-shoulder direction classifier is utilized to perform classification on the top view, so as to obtain an initial pair of relative directions from N pairs of relative directions to serve as the perpendicular-to-shoulder direction recognition result.

The initial pair of relative directions obtained may be vertical to the shoulder direction of the human body because when he/she walks, his/her moving direction is usually vertical to his/her shoulder direction.

Here, it is supposed that N pairs of relative directions are predetermined. For example, if N is equal to four, then four pairs of relative directions related to 0, 45, 90, and 135 degrees may be predetermined. The larger N is, the more accurate the precision is. After that, a perpendicular-to-shoulder direction classifier may be obtained as described above.

As such, after the top view is input into the perpendicular-to-shoulder direction classifier, the classification result of the perpendicular-to-shoulder classifier (i.e., a pair of relative directions (e.g., a pair of relative directions +n and -n) obtained from the predetermined N pairs of relative directions) may serve as an initial recognition result (i.e., an initial pair of relative directions) which is vertical to the shoulder direction of the human body. Here, N and n are positive integers, and n is 1, 2, ..., N.

As an instance, it is also possible to conduct time domain smoothing or filtering by using, for example, the forward-backward algorithm in Hidden Markov Models, so as to obtain a smoother initial recognition result.

And then, in STEP S207, back projection (i.e., projection onto the XY plane) is carried out with respect to the three-dimensional image so as to get the two-dimensional information of the head region. After that, in STEP S208, by using the face binary classifier to conduct classification with respect to the two-dimensional information of the head region, it is possible to select, from the initial pair of relative directions (e.g., +n and -n), one direction (e.g., +n) corresponding to the orientation of the facial portion in the head region, so as to serve as the orientation of the human body. The two-dimensional information of the head region may include color information, bounding box information, etc.

Here the face binary classifier may detect, on the basis of the color feature and/or the bounding box feature related to the facial portion, the position of the facial portion in the two-dimensional information of the head region, for example, the right or left side of the head region. If it is determined that the facial portion is located on the left side of the head region, then that means the human body may face toward the left. As such, the direction facing toward the left in the initial pair of relative directions obtained may be the current orientation of the human body. On the other hand, if it is determined that the facial portion is located on the right side of the head region, then that means the human body may face toward the right. As such, the direction facing toward to the right in the initial pair of relative directions obtained may be the current orientation of the human body.

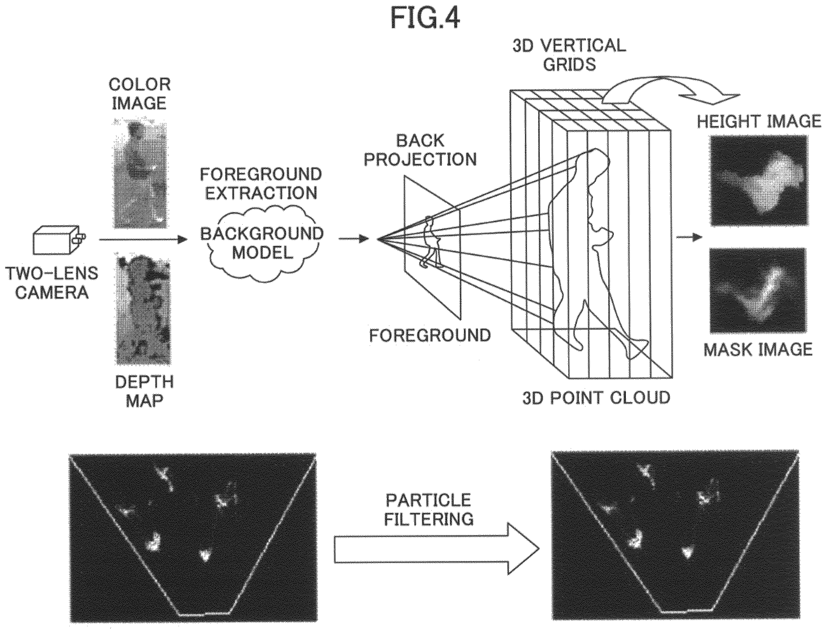

FIG. 4 illustrates the principles of top view generation as well as human body detection and tracking.

The top view generation may include coordinate conversion and projection. In the coordinate conversion process, plural two-dimensional foreground pixels and their corresponding depth values are converted into a camera coordinate system (CCS) so as to obtain plural three-dimensional points, and then, the plural three-dimensional points are converted into a local world coordinate system (WCS) relative to the two-lens camera from the CCS.

Here it should be noted that the local WCS may be just below the CCS and lay flat on the ground surface. Compared to the standard CCS, the WCS has the same X direction and the opposite Y direction, and the projection onto the ground surface of the Z axis of the CCS coincides with the Z axis of the WCS. As such, the ground surface is also called a "XZ plane".

Additionally, in the projection process, the three-dimensional points in the local WCS are projected onto the discrete XZ planes so as to generate a top view. In each of the discrete grids (here a 3D grid is also called a "bin"; for example, a 4 cm×4 cm 3D grid may serve as a bin) of the top view, the three-dimensional coordinates of a point having highest Y component (under the local WCS) are retained so as to generate a "height image" which represents the height distribution in the real three-dimensional scene. Aside from this, it is also possible to count the number of points in each bin so as to generate a "mask image". This kind of mask image may express the visible area of the human body being detected and tracked by utilizing according to normalization based on the squares of depths. Both the height image and the mask image may be obtained from the top view, and may be used for the following human body detection and tracking.

The human body detection and tracking includes conducting detection and tracking with respect to the human body in the top view. In general, when utilizing a height image to detect and track a human being, a region in the height image, which is detected and tracked, is called a template, and its size may be predetermined (e.g., 20 bins× 20 bins), for instance. Here the human body detection may be based on the Euclidean distance so as to acquire the distance between two templates. The human body tracking may be based on particle filtering, namely, the mask image may serve as a mask to conduct filtering with respect to the height image so as to remove the noise therein. For more information about the particle filtering and noise removal process, it is also possible to refer to "Fast, Integrated Person Tracking and Activity Recognition with Plan-View Template from a Single Stereo Camera" (Michael Harville and Dalong Li; CVPR 2004).

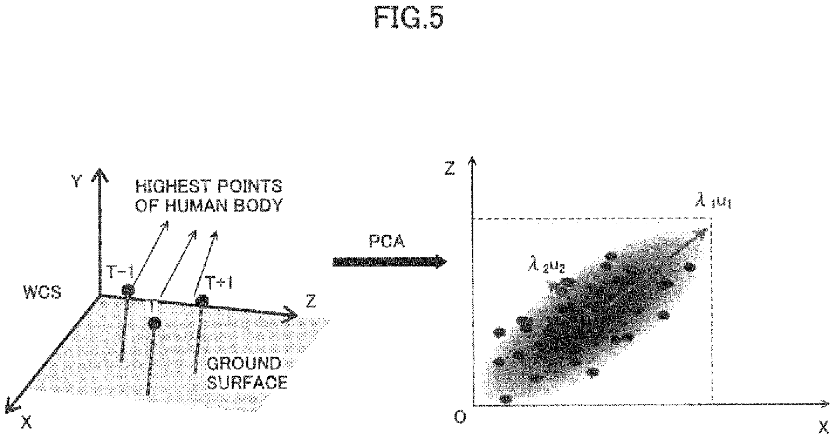

FIG. 5 illustrates an example of direction estimation based on a movement trajectory or locations.

In this example, the highest point of the human body (corresponding to the top of the human body's head) may be obtained from his/her height template. As such, by further utilizing a tracking technology, it is possible to obtain the movement trajectory of the highest point, which represents the movement trajectory or locations of the human body.

After acquiring the movement trajectory of the highest point, it is possible to determine the moving velocity of the human body on the grounds of the known frame rate of the two-lens camera. If the moving velocity of the human body is greater than the predetermined threshold, that means the human body moves relatively fast. In this case, the movement trajectory of the human body may naturally express the moving direction of the human body. Consequently, by utilizing the PCA (Principal Component Analysis) approach, it is possible to acquire the principal direction of the human body at a location associated with time in the three-dimensional space, so as to serve as the reasonable direction estimate of the human body at the location. Since the technique of using the PCA approach to obtain the moving direction of the human body is well known to those people skilled in the art, the detailed explanation is omitted here.

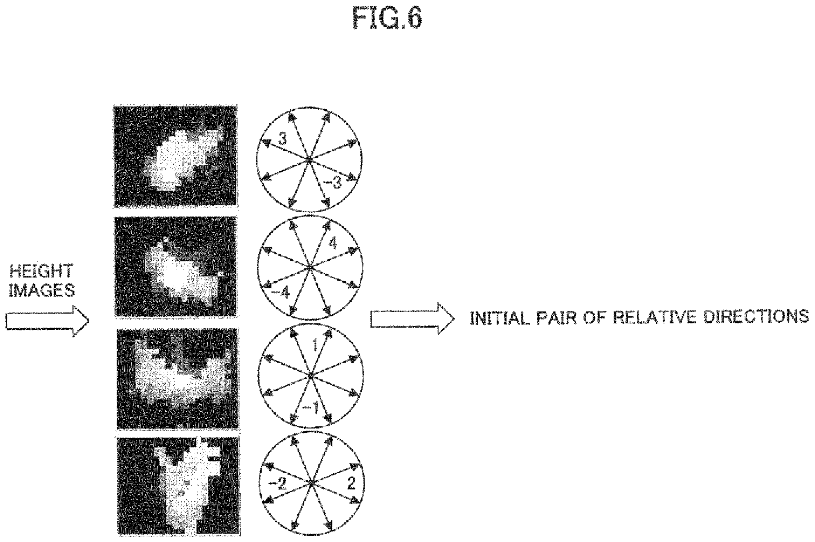

FIG. 6 illustrates an example of perpendicular-to-shoulder direction (i.e., N-direction) classification conducted with respect to a detection region of the top view.

The height distribution in a height template implicitly includes the orientation information of the human body therein relative to the relevant local WCS (World Coordinate System). As such, it is possible to adopt a typical feature extraction and classification paradigm. When conducting feature extraction, some techniques include but are not limited to re-centering, height normalization (e.g., normalized to the height of a highest point in a current height template), filtering, and dimension reduction which are able to be performed on the height template.

For example, it is possible to regard the height template as a region of interest so as to calculate the geometric center of this region, and then, to find the highest point of this region which may be used for conducting height normalization. After that, the above-described mask image may be utilized for carrying out filtering, and the PCA analysis approach may be used for conducting dimension reduction.

Here, when carrying out classification, the classification approach may include but is not limited to an unsupervised learning based one, a supervised learning (e.g., RF (Random Forest), SVM (Support Vector Machine), or AdaBoost) based one, and a semi-supervised learning based one. Since the orientation of the human body has a static property, it is not necessary to adopt an online learning way.

In this example, preferably the RF based classifier serves as a multiclass classifier. The RF based classifier may utilize a sequence of super planes to split a feature space into different sub spaces, each splitting dividing the current space into two or more. Finally, by using this classification process, it is possible to obtain an N-direction recognition result.

According to experiments, if the RF based classifier is adopted, then since it is possible to directly cascade-connect the floating point type pixels to be the relevant feature, it is possible to acquire a high recognition rate without conducting height normalization and dimension reduction.

As shown in FIG. 6, four pairs of relative directions (i.e., N=4) are illustrated, respectively. Each pair of relative directions includes two relative directions, for example, 1 and -1, 2 and -2, 3 and -3, or 4 and -4. Here these directions are vertical to the shoulder direction of the human body. In this case, by utilizing the perpendicular-to-shoulder direction (i.e., N-direction) classification approach, it is possible to obtain an initial two relative directions (i.e., an initial pair of relative directions) from the four pairs of relative directions.

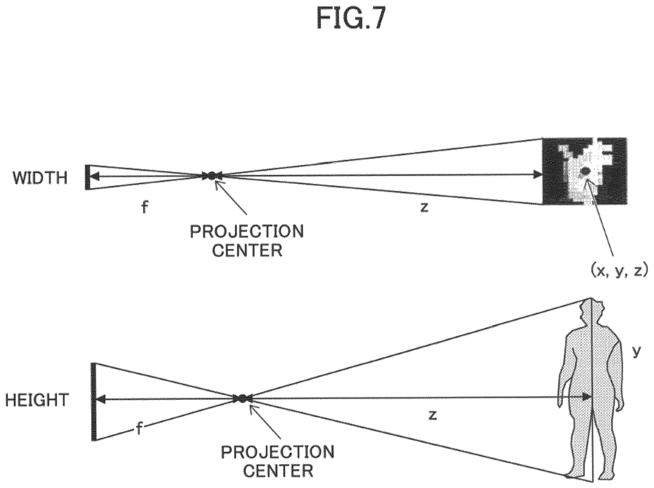

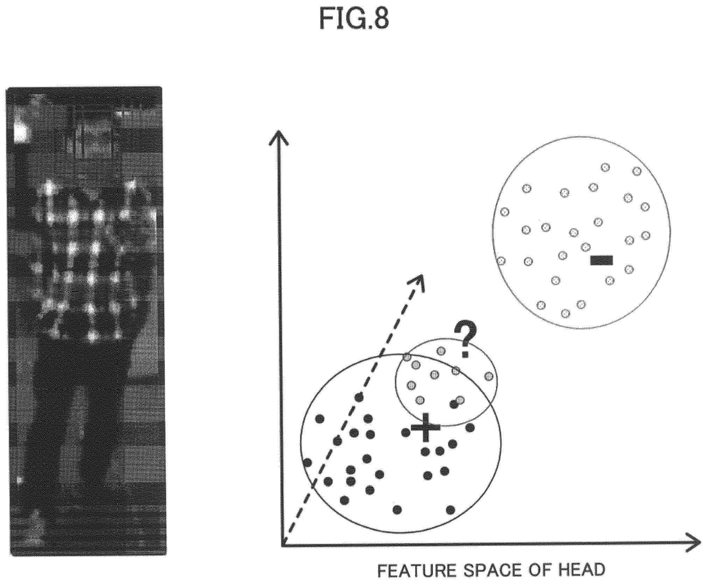

In order to further determine a direction from the initial two relative directions to serve as the orientation of the human being, it is possible to utilize a face binary classification approach which will be depicted in detail below by referring to FIGS. 7 and 8.

FIG. 7 illustrates an example of how to obtain a human body bounding box in a two-dimensional image obtained by utilizing the principle of back projection.

In order to acquire the human body bounding box (e.g., a rectangle), it is possible to conduct back projection with respect to the three-dimensional image including the foreground pixels (i.e., the human body) so as to obtain a rectangle in the two-dimensional image projected. Here, since the three-dimensional coordinates of the highest point of each bin in a height template have been retained, it is possible to acquire the highest point (i.e., the top of the human body's head) in the height template by comparing the highest points in the respective bins therein. Additionally, the acquired highest point in the height template is also back-projected.

In particular, it is possible to back-project the acquired highest point in the height template onto the two-dimensional image according to coordinate conversion, for example, the top of the human body's head shown in FIG. 7.

Here it should be noted that in a case where when conducting the three-dimensional reconstruction process, the coordinates of the relevant two-dimensional image have been retained, the step of back-projecting the acquired highest point in the height template may be omitted. In other words, as long as it is possible to obtain the projection of the acquired highest point which is similar to the result of the back projection step, it is okay.

After that, it is possible to determine the human body bounding box. In particular, since the highest Y component in the height template (corresponding to the length of the human body) has been retained, it is easy to calculate the length of the human body in the two-dimensional image by utilizing the principle of perspective projection (i.e., the similar triangle related calculation). In the same way, since the width of the height template is also known, it is possible to calculate the width of the human body bounding box in the two-dimensional image. Eventually, by using the two-dimensional coordinates of the acquired highest point in the height template as well as the height and width of the human body bounding box, it is possible to uniquely determine a rectangle in the two-dimensional image to serve as the human body bounding box.

FIG. 8 illustrates an example of conducting face binary classification with respect to a human body bounding box.

This example includes the following steps, namely, (1) conducting detection or estimation with respect to a head region; (2) performing scale normalization and feature extraction; and (3) carrying out face binary classification.

In the step (1), since one of the above-described initial two relative directions (although they are vertical to the shoulder direction of the human body, as shown in FIG. 6) is implicitly expressed by the image information (i.e., the two-dimensional information) of the head region at the human body bounding box in the two-dimensional image, it is possible to detect or estimate, by utilizing some predetermined ways, a head region (or plural candidate regions) in the human body bounding box shown in FIG. 8.

For example, it is possible to extract, based on the ratio of the head length to the body length, the height of the highest point in the three-dimensional image, the ratio of the head width to the shoulder width, and the height of the highest point among the widths in the top view, the head region from the human body bounding box in the two-dimensional image so as to get the two-dimensional information of the head region.

In the step (2), since plural head regions (if they exist) in the two-dimensional image may be different in scale, it is possible to normalize the plural head regions to the same scale. Here it should be noted that this normalization process is optional.

Additionally, when conducting feature extraction, the spatial information of the head region should be retained. In this example, a raw feature (or a Haar-like feature) may be adopted, for instance. Here a proposal, which has been proven to be good according to experiments, is cascade-connecting the color values (e.g., the Hue channel values in the HSV (Hue, Saturation, and Value) color space) of the pixels in the head region so as to serve as the feature of the head region. For example, each small dot on the right side of FIG. 8 refers to a feature.

In the step (3), after the head region is detected or estimated, it is possible to use an offline learning approach to determine the result of face binary classification. That is, it is possible to determine to which one of the initial two relative directions the head region belongs. In this example, it is possible to use a KNN (K-Nearest Neighbor) based classifier to serve as the face binary classifier. Of course, it is also possible to adopt a Hausdorff distance based classifier, for instance.

As shown on the right side of FIG. 8, the respective small dots surrounded by two bigger circles including + and - refer to features obtained based on a lot of training samples belonging to a pair of relative directions + and - (which are vertical to the shoulder direction of the human body) when training the face binary classifier, the features being extracted as described in the step (2). The respective dots surrounded by one smaller circle refer to features of the head region to be recognized, the feature being also extracted as described in the step (2).

Here, for example, it is possible to utilized the KNN algorithm or the Hausdorff distance algorithm to determine that the respective dots in the smaller circle are closer to the respective dots in the bigger circle including + or -. Here it is apparent from FIG. 8 that the respective dots in the smaller circle are closer to the respective dots in the bigger circle including +. As a result, the classification result of face binary classification conducted with respect to the head region is the direction facing toward to + in this drawing. In this way, it is possible to output the direction of the initial two relative directions corresponding the classification result so as to serve the orientation of the human body.

Here it should be noted that when training the face binary classifier, it is possible to train a binary classifier suitable for each of predetermined pairs of relative directions, and after obtaining the initial pair of relative directions by the perpendicular-to-shoulder, it is possible to select one from the trained binary classifiers proper for the initial pair of relative directions to serve as the face binary classifier.

For example, regarding the directions +1 and -1 shown in FIG. 6, it is possible to collect a lot of training samples, whose relevant face orientations are known to be +1 or -1, so as to train a binary classifier for the pair of relative directions +1 and -1 on the basis of a raw feature, a Haar-like feature, a Hue value cascade connection based feature, etc. As such, after the perpendicular-to-shoulder direction classifier gives a pair of relative directions +1 and -1 as the initial orientation recognition result, it is possible to utilize the binary classifier trained for the pair of relative directions +1 and -1 so as to output a final orientation recognition result.

Of course, the above case of training the binary classifier for each of the predetermined pairs of relative directions is just an example. That is, the present invention is not limited to this.

According to this embodiment, it is possible to recognize the orientation of the human body and to get a competitive recognition accuracy. In the first stage, one of N pairs of relative directions may be output as an initial recognition result, and in the second stage, a final binary classification result may be output on the ground of the initial recognition result. As a result, generally speaking, it is possible to recognize 2×N orientations.

The following Table 1 shows the recognition accuracies related to a case where the number of orientations are four and eight (i.e., N=4 and N=8) and the human body orientation recognition method according to this embodiment without time domain smoothing for improving performance is applied to the detection region of the top view.

**Table 1**

| Feature Dimensions | Orientations (N) | Height Normalization | RF Based Recognition Accuracy | SVM Based Recognition Accuracy |
|---|---|---|---|---|
| 100 | 4 | Raw Feature | 72.0% | 36.7% |
| 100 | 4 | 1.0 | 74.8% | 71.5% |
| 100 | 4 | 0.95 | 74.0% | 71.8% |
| 100 | 8 | Raw Feature | 57.4% | 20.6% |
| 100 | 8 | 1.0 | 59.2% | 47.7% |
| 100 | 8 | 0.95 | 57.8% | 46.3% |
| 400 | 4 | Raw Feature | 77.0% | 32.8% |
| 400 | 4 | 1.0 | 74.5% | 76.5% |
| 400 | 4 | 0.95 | 75.5% | 77.2% |
| 400 | 8 | Raw Feature | 62.5% | 18.8% |
| 400 | 8 | 1.0 | 59.0% | 52.3% |
| 400 | 8 | 0.95 | 60.0% | 52.2% |

Here it should be noted that in Table 1, regarding the RF (Random Forest) based recognition process, the largest depth is 50, the minimum sample space is 3, and there are 150 random numbers; and regarding the SVM (Support Vector Machine) based recognition process, the relevant parameters may be optimized according to grid search. Since the grid search is a well-used approach for SVM parameter optimization, its concrete description is omitted. From Table 1, it is apparent that by utilizing a multiclass classifier based on RF to serve as the perpendicular-to-shoulder direction classifier, it is possible to obtain a recognition accuracy higher than that which is acquired by using a multiclass classifier based on SVM to serve as perpendicular-to-shoulder direction classifier.

Of course, both the RF based recognition accuracy and the SVM based recognition accuracy are much higher than the recognition accuracies based on the various conventional recognition methods. Additionally, it should be noted that the present invention is not limited to the RF based multiclass classifier.

Furthermore, the following Table 2 shows the recognition accuracy related to a case where the number of orientations is four (i.e., N=4) and the human body orientation recognition method according to this embodiment, in which a KNN (K-Nearest Neighbor) algorithm is utilized, is applied to the detection region of the top view. Here, each number in the orientation column of Table 2 (e.g., +1) represents an orientation, as shown in FIG. 6.

**Table 2**

| Orientation | K=1 | K=7 | K=15 | K=30 | K=60 | K=90 | K=190 |
|---|---|---|---|---|---|---|---|
| +1 | 100% | 100% | 100% | 100% | 100% | 100% | 100% |
| -1 | 97.7% | 88.9% | 82.2% | 77.8% | 75.6% | 71.1% | 53.3% |
| +2 | 100% | 100% | 100% | 100% | 100% | 100% | 95.6% |
| -2 | 66.7% | 66.7% | 55.5% | 51.1% | 22.2% | 35.6% | 48.9% |
| +3 | 80% | 84.4% | 93.3% | 100% | 100% | 100% | 100% |
| -3 | 88.9% | 75.6% | 60% | 55.6% | 23.7% | 2.2% | 0% |
| +4 | 100% | 100% | 100% | 100% | 100% | 100% | 100% |
| -4 | 100% | 95.6% | 97.8% | 97.8% | 97.8% | 97.8% | 95.6% |

It is obvious from the above that by utilizing the human body orientation recognition method according to this embodiment, it is possible to dramatically improve the orientation recognition accuracy even in a case where the moving velocity of the human body is relatively small.

Therefore, in this embodiment, by utilizing the top view based on the foreground pixels, it is possible to track the movement trajectory of the foreground object (i.e., the human body), and when the moving velocity of the human body is relative large, to adopt the direction of the movement trajectory of the human body to serve as the human body orientation, so that it is possible to reduce the amount of calculation and to improve the efficiency of the human body orientation recognition process. On the other hand, when the moving velocity of the human body is relatively small, by respectively adopting two classifiers (i.e., the perpendicular-to-shoulder direction classifier and the face binary classifier) in two stages (i.e., the first and second stages), in the first stage, it is possible to obtain the initial pair of directions vertical to the shoulder direction of the human body, and then, to obtain the head region by conducting back projection; and in the second stage, it is possible to select, from the initial pair of directions, one direction approaching the orientation of the facial portion in the head region to serve as the final orientation of the human body. As a result, even in a case where the moving velocity of the human body is relatively small, it is also possible to accurately estimate the orientation of the human body so as to have a better human body orientation recognition effect.

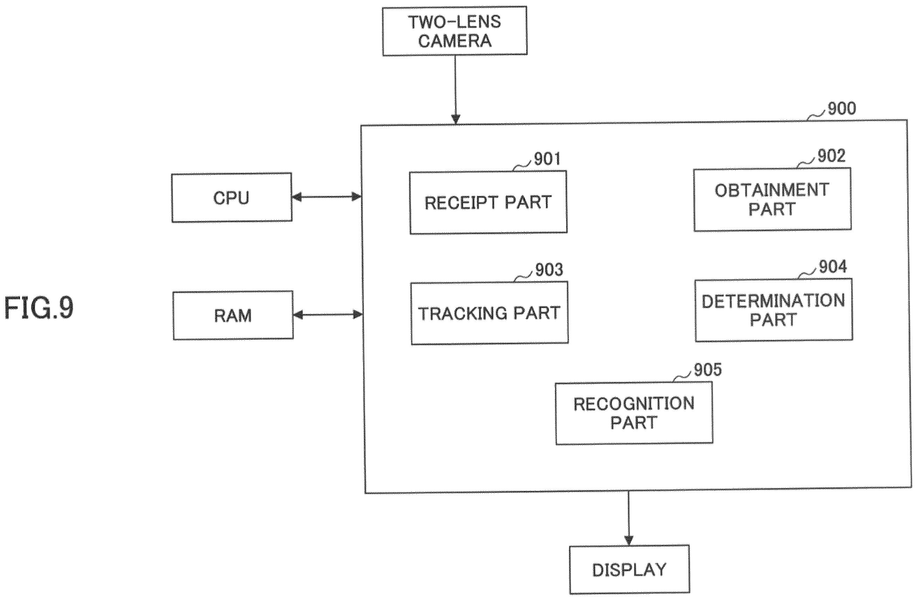

In what follows, a human body recognition system according to an embodiment of the present invention will be given by referring to FIG. 9.

FIG. 9 illustrates a block diagram of a human body recognition system 900 according to this embodiment.

As shown in FIG. 9, the human body recognition system 900 may include a receipt part 901, an obtainment part 902, a tracking part 903, a determination part 904, and a recognition part 905.

The receipt part 901 is configured to carry out STEP S201 in FIG. 2. The obtainment part 902 is configured to conduct STEP S202 in FIG. 2. The tracking part 903 is configured to perform STEP S203 in FIG. 2. The determination part 904 is configured to execute STEP S204 in FIG. 2. And the recognition part 905 is configured to implement STEPS S205 to S208 in FIG. 2.

Here it should be noted that since STEPS S201 to S202 in FIG. 2 have been depicted in detail above, the repeated descriptions are omitted.

In addition, as shown in FIG. 9, for example, a two-lens camera, a CPU (Central Processing Unit), a RAM (Random Access Memory), and a display may also be connected to the human body orientation recognition system 900 for conducting the relevant processes such as inputting data, calculation, storing data, and displaying the human body orientation recognition result.

Therefore, in this embodiment, by utilizing the top view based on the foreground pixels, it is possible to track the movement trajectory of the foreground object (i.e., the human body), and when the moving velocity of the human body is relative large, to adopt the direction of the movement trajectory of the human body to serve as the human body orientation, so that it is possible to reduce the amount of calculation and to improve the efficiency of the human body orientation recognition process. On the other hand, when the moving velocity of the human body is relatively small, by respectively adopting two classifiers (i.e., the perpendicular-to-shoulder direction classifier and the face binary classifier) in two stages (i.e., the first and second stages), in the first stage, it is possible to obtain the initial pair of directions vertical to the shoulder direction of the human body, and then, to obtain the head region by conducting back projection; and in the second stage, it is possible to select, from the initial pair of directions, one direction approaching the orientation of the facial portion in the head region to serve as the final orientation of the human body. As a result, even in a case where the moving velocity of the human body is relatively small, it is also possible to accurately estimate the orientation of the human body so as to have a better human body orientation recognition effect.

It should be noted that the above respective embodiments are just exemplary ones, and the specific structure and operation of them may not be used for limiting the present invention.

Moreover, the embodiments of the present invention may be implemented in any convenient form, for example, using dedicated hardware or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present invention is described with reference to the specific embodiments chosen for purpose of illustration, it should be apparent that the present invention is not limited to these embodiments, but numerous modifications could be made thereto by those people skilled in the art without departing from the basic concept and technical scope of the present invention.

## Claims

1. A method of recognizing a human body orientation based on a two-lens camera (101), comprising:
a receipt step (S201) of receiving a grayscale or color image and a corresponding depth map including the human body, obtained by the two-lens camera;
an obtainment step (S202) of conducting foreground recognition to get foreground pixels so as to carry out XYZ-dimensional reconstruction with respect to a depth map of the foreground pixels in a world coordinate system to acquire a three-dimensional image, and then, projecting the three-dimensional image onto the XZ plane in the world coordinate system so as to obtain a top view, wherein, X represents width, Y denotes height, and Z refers to depth;
a tracking step (S203) of tracking a movement trajectory of the human body based on the top view;
a determination step (S204) of determining whether a moving velocity of the human body acquired according to the movement trajectory of the human body is greater than a predetermined threshold;
a first recognition step (S205) of recognizing, if the moving velocity of the human body is greater than the predetermined threshold, a direction of the movement trajectory of the human body as the human body orientation;
a first acquirement step (S206) of conducting, if the moving velocity of the human body is less than or equal to the predetermined threshold, classification with respect to the top view by using a perpendicular-to-shoulder direction classifier so as to acquire an initial pair of relative directions from plural predetermined pairs of relative directions;
a second acquirement step (S207) of conducting back projection onto the plane XY with respect to the three-dimensional image so as to acquire two-dimensional information of a head region; and
a second recognition step (S208) of conducting classification with respect to the two-dimensional information of the head region by utilizing a face binary classifier so as to select one direction from the initial pair of relative directions which corresponds to an orientation of a facial portion in the head region to serve as the human body orientation.

2. The method according to claim 1, wherein, the perpendicular-to-shoulder direction classifier includes a classifier obtained in a manner of
letting each of discrete rectangles on the XZ plane of each top view to serve as a height template, and then, regarding a highest Y component of each point in each template, extracting a feature retaining spatial information; and
collecting, based on the feature, plural training samples whose relevant directions are known to be vertical to a shoulder direction of the human body to carry out training so as to obtain the classifier.

3. The method according to claim 1 or claim 2, wherein, the face binary classifier includes a classifier obtained in a manner of
extracting a feature retaining spatial information from the head region of the human body in the grayscale or color image; and
collecting, based on the feature, plural training samples whose facial positions are known to carry out training so as to obtain the classifier.

4. The method according to claim 1, claim 2 or claim 3, wherein, the tracking step includes
getting a sequence of height images after noise filtering from a sequence of depth images obtained by the two-lens camera in a manner of
regarding each top view, letting each of discrete rectangles on the XZ plane therein to serve as a height template, and then, retaining a highest Y component of each point in each height template so as to obtain a height image,
regarding each height template, counting a number of points in each bin therein so as to obtain a mask image, and
regarding each height template, applying the corresponding mask image to the corresponding height image so as to carry out noise filtering; and
detecting and tracking the height templates in the sequence of height images after noise filtering so as to obtain a movement trajectory related to the height templates.

5. The method according to claim 4, further comprising:
by calculating Euclidean distances between the adjacent height templates in the sequence of height images after noise filtering, computing the moving velocity of the human body based on a frame rate of the two-lens camera,
wherein, the first recognition step includes letting a principal direction of the human body obtained by utilizing a Principal Component Analysis approach based on the movement trajectory related to the height templates to serve as the human body orientation.

6. The method according to any preceding claim, wherein, the obtainment step includes
converting the depth image into a camera coordinate system, and then, into a local world coordinate system relative to the two-lens camera so as to obtain the top view.

7. The method according to any preceding claim, wherein, the second acquirement step includes
conducting back projection with respect to the three-dimensional image so as to obtain a two-dimensional human body bounding box; and
based on a ratio of a length of the human body's head to a length of the human body, a height of a highest point in the three-dimensional image, a ratio of a width of the human body's head to a width of the human body's shoulder, and a height of a highest point among widths in the top view, extracting the head region from the human body bounding box so as to obtain the two-dimensional information of the head region.

8. The method according to claim 2, wherein, the perpendicular-to-shoulder direction classifier is a supervised learning based one, an unsupervised learning based one, or a semi-supervised learning based one.

9. The method according to claim 3, wherein, the face binary classifier is a K-Nearest Neighbor based one or a Hausdorff distance based one.

10. A system (900) for recognizing a human body orientation based on a two-lens camera (101), comprising:
a receipt part (901) configured to receive a grayscale or color image and a corresponding depth map including the human body, obtained by the two-lens camera;
an obtainment part (902) configured to conduct foreground recognition to get foreground pixels so as to carry out XYZ-dimensional reconstruction with respect to a depth map of the foreground pixels in a world coordinate system to acquire a three-dimensional image, and then, to project the three-dimensional image onto the XZ plane in the world coordinate system so as to obtain a top view, wherein, X represents width, Y denotes height, and Z refers to depth;
a tracking part (903) configured to track a movement trajectory of the human body based on the top view;
a determination part (904) configured to determine whether a moving velocity of the human body acquired according to the movement trajectory of the human body is greater than a predetermined threshold; and
a recognition part (905) configured to
if the moving velocity of the human body is greater than the predetermined threshold, then recognize a direction of the movement trajectory of the human body as the human body orientation, and
if the moving velocity of the human body is less than or equal to the predetermined threshold, then
conduct classification with respect to the top view by using a perpendicular-to-shoulder direction classifier so as to acquire an initial pair of relative directions from plural predetermined pairs of relative directions,
conduct back projection onto the plane XY with respect to the three-dimensional image so as to acquire two-dimensional information of a head region; and
conduct classification with respect to the two-dimensional information of the head region by utilizing a face binary classifier so as to select one direction from the initial pair of relative directions which corresponds to an orientation of a facial portion in the head region to serve as the human body orientation.

11. A computer-executable program for causing a computer to carry out the method according to any of claims 1 to 9.

12. A non-transitory computer-readable medium having a computer-executable program of instructions for execution by a processing system, the computer-executable program, when executed, causing the processing system to carry out the method according to any of claims 1 to 9.

## Patentansprüche

1. Verfahren zum Erkennen einer menschlichen Körperorientierung auf der Basis einer Zwei-Linsen-Kamera (101), umfassend:
einen Empfangsschritt (S201) des Empfangens eines Graustufen- oder Farbbildes und einer zugehörigen Tiefenkarte, einschließend den menschlichen Körper, die von der Zwei-Linsen-Kamera erhalten werden;
einen Erfassungsschritt (S202) zum Durchführen einer Vordergrunderkennung, um Vordergrundpixel zu erhalten, um eine XYZ-dimensionale Rekonstruktion in Bezug auf eine Tiefenkarte der Vordergrundpixel in einem Weltkoordinatensystem auszuführen, um ein dreidimensionales Bild zu erfassen, und zum nachfolgenden Projizieren des dreidimensionalen Bilds auf die XZ-Ebene in dem Weltkoordinatensystem, um eine Draufsicht zu erhalten, wobei X für die Breite steht, Y die Höhe und Z die Tiefe bezeichnet;
einen Verfolgungsschritt (S203) zum Verfolgen einer Bewegungsbahn des menschlichen Körpers auf Basis der Draufsicht;
einen Bestimmungsschritt (S204) zum Bestimmen, ob eine Bewegungsgeschwindigkeit des menschlichen Körpers, die gemäß der Bewegungsbahn des menschlichen Körpers erfasst wird, größer als eine vorbestimmte Schwelle ist;
einen ersten Erkennungsschritt (S205), wenn die Bewegungsgeschwindigkeit des menschlichen Körpers größer als die vorbestimmte Schwelle ist, zum Erkennen einer Richtung der Bewegungsbahn des menschlichen Körpers als die menschliche Körperorientierung;
einen ersten Erfassungsschritt (S206), wenn die Bewegungsgeschwindigkeit des menschlichen Körpers kleiner oder gleich der vorbestimmten Schwelle ist, zum Durchführen einer Klassifizierung in Bezug auf die Draufsicht unter Verwendung eines Richtungsklassifikators senkrecht zur Schulter, um ein Anfangspaar von relativen Richtungen von mehreren vorbestimmten Paaren von relativen Richtungen zu erfassen;
einen zweiten Erfassungsschritt (S207) zum Durchführen einer Rückprojektion auf die Ebene XY in Bezug auf das dreidimensionale Bild, um zweidimensionale Informationen eines Kopfbereichs zu erfassen; und
einen zweiten Erkennungsschritt (S208) zum Durchführen einer Klassifizierung in Bezug auf die zweidimensionalen Informationen des Kopfbereichs unter Verwendung eines Gesichts-Binärklassifikators, um eine Richtung aus dem Anfangspaar der relativen Richtungen auszuwählen, die einer Orientierung eines Gesichtsabschnitts in der Kopfregion entspricht, um als menschliche Körperorientierung dienen.

2. Verfahren nach Anspruch 1, wobei der Richtungsklassierer senkrecht zur Schulter einen Klassifikator enthält, der in folgender Weise erhalten wird:
Dienenlassen eines jeden diskreten Rechtecks auf der XZ-Ebene jeder Draufsicht als Höhenvorlage, und dann, in Bezug auf eine höchste Y-Komponente jedes Punktes in jeder Vorlage, Extrahieren eines Merkmals, das räumliche Informationen speichert; und
Sammeln, basierend auf dem Merkmal, mehrerer Trainingsproben, von deren relevanten Richtungen bekannt ist, dass sie vertikal zu einer Schulterrichtung des menschlichen Körpers verlaufen, um das Training durchzuführen, um so den Klassifikator zu erhalten.

3. Verfahren nach Anspruch 1 oder 2, wobei der Gesichts-Binärklassifikator einen Klassifikator enthält, der in folgender Weise erhalten wird:
Extrahieren eines Merkmals, das räumliche Informationen aus dem Kopfbereich des menschlichen Körpers in dem Graustufen- oder Farbbild speichert; und
Sammeln, basierend auf dem Merkmal, mehrerer Trainingsproben, deren Gesichtspositionen bekannt sind, um das Training durchzuführen, um so den Klassifikator zu erhalten.

4. Verfahren nach Anspruch 1, Anspruch 2 oder Anspruch 3, wobei der Verfolgungsschritt Folgendes beinhaltet:
Erhalten einer Sequenz von Höhenbildern nach einer Rauschfilterung aus einer Folge von Tiefenbildern, die von der Zwei-Linsen-Kamera in folgender Weise erhalten werden:
in Bezug auf jede Draufsicht, Dienenlassen eines jeden diskreten Rechtecks auf der XZ-Ebene jeder Draufsicht als Höhenvorlage, und dann Speichern einer höchsten Y-Komponente jedes Punktes in jeder Höhenvorlage, um so ein Höhenbild zu erhalten,
in Bezug auf jede Höhenvorlage, Zählen einer Anzahl von Punkten in jedem Behältnis darin, um so ein Maskenbild zu erhalten, und
in Bezug auf jede Höhenvorlage, Anwenden des entsprechenden Maskenbildes auf das entsprechende Höhenbild, um so eine Rauschfilterung durchzuführen; und
Erfassen und Verfolgen der Höhenvorlagen in der Sequenz von Höhenbildern nach der Rauschfilterung, um so eine Bewegungsbahn zu erhalten, die sich auf die Höhenvorlagen bezieht.

5. Verfahren nach Anspruch 4, ferner umfassend:
durch Berechnung von euklidischen Abständen zwischen den benachbarten Höhenvorlagen in der Sequenz von Höhenbildern nach der Rauschfilterung, Berechnen der Bewegungsgeschwindigkeit des menschlichen Körpers auf Basis einer Bildrate der Zwei-Linsen-Kamera,
wobei der erste Erkennungsschritt das Dienenlassen einer Hauptrichtung des menschlichen Körpers, die durch Verwendung eines Hauptkomponentenanalyseansatzes auf Basis der Bewegungsbahn erhalten wird, die sich auf die Höhenvorlagen bezieht, als die menschliche Körperorientierung umfasst.

6. Verfahren nach einem der vorhergehenden Ansprüche, wobei der Erfassungsschritt Folgendes beinhaltet:
Umwandeln des Tiefenbildes in ein Kamerakoordinatensystem und dann in ein lokales Weltkoordinatensystem relativ zu der Zwei-Linsen-Kamera, um so die Draufsicht zu erhalten.

7. Verfahren nach einem der vorhergehenden Ansprüche, wobei der zweite Erfassungsschritt Folgendes beinhaltet:
Durchführen einer Rückprojektion in Bezug auf das dreidimensionale Bild, um so einen zweidimensionalen menschlichen Körper-Begrenzungsrahmen zu erhalten; und
basierend auf einem Verhältnis von einer Länge des Kopfes des menschlichen Körpers zu einer Länge des menschlichen Körpers, einer Höhe eines höchsten Punktes im dreidimensionalen Bild, eines Verhältnisses von einer Breite des Kopfes des menschlichen Körpers zu einer Breite der Schulter des menschlichen Körpers und einer Höhe eines höchsten Punktes unter den Breiten in der Draufsicht, Extrahieren des Kopfbereichs aus dem menschlichen Körper-Begrenzungsrahmen, um die zweidimensionalen Informationen des Kopfbereichs zu erhalten.

8. Verfahren nach Anspruch 2, wobei der Richtungsklassifikator senkrecht zur Schulter ein überwachter lernbasierter, ein nicht überwachter lernbasierter oder ein halbüberwachter lernbasierter ist.

9. Verfahren nach Anspruch 3, wobei der Gesichts-Binärklassifikator ein K-Nearest Neighbor-basierter oder ein Hausdorff-Distanz-basierter ist.

10. System (900) zum Erkennen einer menschlichen Körperorientierung auf der Basis einer Zwei-Linsen-Kamera (101), umfassend:
ein Empfangsteil (901), das konfiguriert ist zum Empfangen eines Graustufen- oder Farbbildes und einer zugehörigen Tiefenkarte, einschließend den menschlichen Körper, die von der Zwei-Linsen-Kamera erhalten werden;
ein Erfassungsteil (902), das konfiguriert ist zum Durchführen einer Vordergrunderkennung, um Vordergrundpixel zu erhalten, um eine XYZ-dimensionale Rekonstruktion in Bezug auf eine Tiefenkarte der Vordergrundpixel in einem Weltkoordinatensystem auszuführen, um ein dreidimensionales Bild zu erfassen, und zum nachfolgenden Projizieren des dreidimensionalen Bilds auf die XZ-Ebene in dem Weltkoordinatensystem, um eine Draufsicht zu erhalten, wobei X für die Breite steht, Y die Höhe und Z die Tiefe bezeichnet;
ein Verfolgungsteil (903), das konfiguriert ist zum Verfolgen einer Bewegungsbahn des menschlichen Körpers auf Basis der Draufsicht;
ein Bestimmungsteil (904), das konfiguriert ist zum Bestimmen, ob eine Bewegungsgeschwindigkeit des menschlichen Körpers, die gemäß der Bewegungsbahn des menschlichen Körpers erfasst wird, größer als eine vorbestimmte Schwelle ist; und
ein Erkennungsteil (905), das konfiguriert ist,
wenn die Bewegungsgeschwindigkeit des menschlichen Körpers größer als die vorbestimmte Schwelle ist, zum Erkennen einer Richtung der Bewegungsbahn des menschlichen Körpers als die menschliche Körperorientierung, und
wenn die Bewegungsgeschwindigkeit des menschlichen Körpers kleiner oder gleich der vorbestimmten Schwelle ist, dann
zum Durchführen einer Klassifizierung in Bezug auf die Draufsicht unter Verwendung eines Richtungsklassifikators senkrecht zur Schulter, um ein Anfangspaar von relativen Richtungen von mehreren vorbestimmten Paaren von relativen Richtungen zu erfassen,
zum Durchführen einer Rückprojektion auf die Ebene XY in Bezug auf das dreidimensionale Bild, um zweidimensionale Informationen eines Kopfbereichs zu erfassen; und
zum Durchführen einer Klassifizierung in Bezug auf die zweidimensionalen Informationen des Kopfbereichs unter Verwendung eines Gesichts-Binärklassifikators, um eine Richtung aus dem Anfangspaar der relativen Richtungen auszuwählen, die einer Orientierung eines Gesichtsabschnitts in der Kopfregion entspricht, um als menschliche Körperorientierung zu dienen.

11. Computerausführbares Programm zum Veranlassen eines Computers, das Verfahren nach einem der Ansprüche 1 bis 9 durchzuführen.

12. Nicht-flüchtiges computerlesbares Medium mit einem computerausführbaren Programm von Befehlen zur Ausführung durch ein Verarbeitungssystem, wobei das computerausführbare Programm, wenn es ausgeführt wird, das Verarbeitungssystem veranlasst, das Verfahren nach einem der Ansprüche 1 bis 9 auszuführen.

## Revendications

1. Procédé de reconnaissance d'une orientation de corps humain sur la base d'une caméra à deux lentilles (101), comportant :
une étape de réception (S201) consistant à recevoir une image couleur ou en niveaux de gris et une carte de profondeur correspondante incluant le corps humain, obtenues par la caméra à deux lentilles ;
une étape d'obtention (S202) consistant à exécuter une reconnaissance d'avant-plan pour obtenir des pixels d'avant-plan en vue de mettre en oeuvre une reconstruction tridimensionnelle de type XYZ relativement à une carte de profondeur des pixels d'avant-plan dans un système de coordonnées mondiales pour acquérir une image tridimensionnelle, et ensuite, à projeter l'image tridimensionnelle sur le plan XZ dans le système de coordonnées mondiales afin d'obtenir une vue de dessus, dans lequel X représente la largeur, Y désigne la hauteur, et Z fait référence à la profondeur ;
une étape de suivi (S203) consistant à suivre une trajectoire de déplacement du corps humain sur la base de la vue de dessus ;
une étape de détermination (S204) consistant à déterminer si une vitesse de déplacement du corps humain, acquise selon la trajectoire de déplacement du corps humain, est supérieure à un seuil prédéterminé ;
une première étape de reconnaissance (S205) consistant à reconnaître, si la vitesse de déplacement du corps humain est supérieure au seuil prédéterminé, une direction de la trajectoire de déplacement du corps humain, en tant que l'orientation du corps humain ;
une première étape d'acquisition (S206) consistant à exécuter, si la vitesse de déplacement du corps humain est inférieure ou égale au seuil prédéterminé, un classement relativement à la vue de dessus, en utilisant un classificateur de direction perpendiculaire à l'épaule, afin d'acquérir une paire initiale de directions relatives à partir de plusieurs paires prédéterminées de directions relatives ;
une seconde étape d'acquisition (S207) consistant à exécuter une rétroprojection sur le plan XY relativement à l'image tridimensionnelle, afin d'acquérir des informations bidimensionnelles d'une zone de tête ; et
une seconde étape de reconnaissance (S208) consistant à exécuter le classement relativement aux informations bidimensionnelles de la zone de tête, en utilisant un classificateur binaire de visage afin de sélectionner une direction à partir de la paire initiale de directions relatives qui correspond à une orientation d'une partie faciale dans la zone de tête, destinée à faire office d'orientation du corps humain.

2. Procédé selon la revendication 1, dans lequel, le classificateur de direction perpendiculaire à l'épaule inclut un classificateur obtenu d'une manière consistant à :
permettre, à chaque rectangle distinct parmi des rectangles distincts sur le plan XZ de chaque vue de dessus, de faire office de modèle de hauteur, et ensuite, en ce qui concerne une composante Y la plus élevée de chaque point dans chaque modèle, extraire une caractéristique conservant des informations spatiales ; et
collecter, sur la base de la caractéristique, plusieurs échantillons d'apprentissage dont les directions pertinentes sont connues comme étant verticales à une direction d'épaule du corps humain, pour mettre en oeuvre l'apprentissage afin d'obtenir le classificateur.

3. Procédé selon la revendication 1 ou 2, dans lequel le classificateur binaire de visage inclut un classificateur obtenu d'une manière consistant à
extraire une caractéristique conservant des informations spatiales de la zone de tête du corps humain dans l'image couleur ou en niveaux de gris ; et
collecter, sur la base de la caractéristique, plusieurs échantillons d'apprentissage dont les positions faciales sont connues, pour mettre en oeuvre l'apprentissage afin d'obtenir le classificateur.

4. Procédé selon la revendication 1, 2 ou 3, dans lequel l'étape de suivi inclut les étapes ci-dessous consistant à :
obtenir une séquence d'images de hauteur après un filtrage du bruit à partir d'une séquence d'images de profondeur obtenue par la caméra à deux lentilles, d'une manière consistant à :
en ce qui concerne chaque vue de dessus, permettre à chaque rectangle distinct parmi des rectangles distincts sur le plan XZ au sein de la vue, de faire office de modèle de hauteur, et ensuite, conserver une composante Y la plus élevée de chaque point dans chaque modèle de hauteur afin d'obtenir une image de hauteur ;
en ce qui concerne chaque modèle de hauteur, compter un nombre de points dans chaque compartiment en son sein, afin d'obtenir une image de masque ; et
en ce qui concerne chaque modèle de hauteur, appliquer l'image de masque correspondante à l'image de hauteur correspondante, de manière à mettre en oeuvre un filtrage du bruit ; et
détecter et suivre les modèles de hauteur dans la séquence d'images de hauteur, après filtrage du bruit, afin d'obtenir une trajectoire de déplacement connexe aux modèles de hauteur.

5. Procédé selon la revendication 4, comprenant en outre l'étape ci-dessous consistant à :
en calculant les distances euclidiennes entre les modèles de hauteur adjacents dans la séquence d'images de hauteur après filtrage du bruit, calculer la vitesse de déplacement du corps humain sur la base d'une fréquence d'images de la caméra à deux lentilles ;
dans lequel, la première étape de reconnaissance consiste à permettre à une direction principale du corps humain, obtenue en utilisant une approche d'analyse en composantes principales basée sur la trajectoire de déplacement connexe aux modèles de hauteur, de faire office d'orientation du corps humain.

6. Procédé selon l'une quelconque des revendications précédentes, dans lequel, l'étape d'obtention consiste à :
convertir l'image de profondeur en un système de coordonnées de caméra, et ensuite en un système de coordonnées mondiales local relativement à la caméra à deux lentilles, en vue d'obtenir la vue de dessus.

7. Procédé selon l'une quelconque des revendications précédentes, dans lequel la seconde étape d'acquisition consiste à :
exécuter une rétroprojection relativement à l'image tridimensionnelle afin d'obtenir un rectangle englobant de corps humain bidimensionnel ; et
sur la base d'un rapport d'une longueur de la tête du corps humain à une longueur du corps humain, d'une hauteur d'un point le plus élevé dans l'image tridimensionnelle, d'un rapport d'une largeur de la tête du corps humain à une largeur de l'épaule du corps humain, et d'une hauteur d'un point le plus élevé parmi les largeurs dans la vue de dessus, extraire la zone de tête du rectangle englobant de corps humain afin d'obtenir les informations bidimensionnelles de la zone de tête.

8. Procédé selon la revendication 2, dans lequel le classificateur de direction perpendiculaire à l'épaule est un classificateur à base d'apprentissage supervisé, un classificateur à base d'apprentissage non supervisé, ou un classificateur à base d'apprentissage semi-supervisé.

9. Procédé selon la revendication 3, dans lequel le classificateur binaire de visage est un classificateur à base de K voisins les plus proches ou un classificateur à base de distance de Hausdorff.

10. Système (900) destiné à reconnaître une orientation de corps humain sur la base d'une caméra à deux lentilles (101), comportant :
une partie de réception (901) configurée de manière à recevoir une image couleur ou en niveaux de gris et une carte de profondeur correspondante incluant le corps humain, obtenues par la caméra à deux lentilles ;
une partie d'obtention (902) configurée de manière à exécuter une reconnaissance d'avant-plan pour obtenir des pixels d'avant-plan en vue de mettre en oeuvre une reconstruction tridimensionnelle de type XYZ relativement à une carte de profondeur des pixels d'avant-plan dans un système de coordonnées mondiales pour acquérir une image tridimensionnelle, et ensuite, à projeter l'image tridimensionnelle sur le plan XZ dans le système de coordonnées mondiales afin d'obtenir une vue de dessus, dans lequel X représente la largeur, Y désigne la hauteur, et Z fait référence à la profondeur ;
une partie de suivi (903) configurée de manière à suivre une trajectoire de déplacement du corps humain sur la base de la vue de dessus ;
une partie de détermination (904) configurée de manière à déterminer si une vitesse de déplacement du corps humain, acquise selon la trajectoire de déplacement du corps humain, est supérieure à un seuil prédéterminé ; et
une partie de reconnaissance (905) configurée de manière à :
si la vitesse de déplacement du corps humain est supérieure au seuil prédéterminé, reconnaître ensuite une direction de la trajectoire de déplacement du corps humain en tant que l'orientation du corps humain ; et
si la vitesse de déplacement du corps humain est inférieure ou égale au seuil prédéterminé, alors
exécuter un classement relativement à la vue de dessus, en utilisant un classificateur de direction perpendiculaire à l'épaule, afin d'acquérir une paire initiale de directions relatives à partir de plusieurs paires prédéterminées de directions relatives ;
exécuter une rétroprojection sur le plan XY relativement à l'image tridimensionnelle, afin d'acquérir des informations bidimensionnelles d'une zone de tête ; et
exécuter un classement relativement aux informations bidimensionnelles de la zone de tête, en utilisant un classificateur binaire de visage afin de sélectionner une direction à partir de la paire initiale de directions relatives qui correspond à une orientation d'une partie faciale dans la zone de tête, destinée à faire office d'orientation du corps humain.

11. Programme exécutable par ordinateur destiné à amener un ordinateur à mettre en oeuvre le procédé selon l'une quelconque des revendications 1 à 9.

12. Support lisible par ordinateur non transitoire présentant un programme d'instructions exécutable par ordinateur destiné à être exécuté par un système de traitement, le programme exécutable par ordinateur, lorsqu'il est exécuté, amenant le système de traitement à mettre en oeuvre le procédé selon l'une quelconque des revendications 1 à 9.
